(19)

Europäisches
Patentamt
European
Patent Office
Office européen
des brevets

(11) **EP 1 616 769 B1**

(12) **EUROPEAN PATENT SPECIFICATION**

(45) Date of publication and mention
of the grant of the patent:
**14.01.2009 Bulletin 2009/03**

(51) Int Cl.:
**B60T 13/573** *(2006.01)*    **B60T 8/00** *(2006.01)*
**B60T 13/66** *(2006.01)*

(21) Application number: **04727123.4**

(86) International application number:
**PCT/JP2004/005234**

(22) Date of filing: **13.04.2004**

(87) International publication number:
**WO 2004/091989 (28.10.2004 Gazette 2004/44)**

(54) **NEGATIVE PRESSURE DOUBLING DEVICE**

UNTERDRUCKVERDOPPLUNGSVORRICHTUNG

DISPOSITIF DOUBLEMENT DE PRESSION NEGATIVE

(84) Designated Contracting States:
**AT BE BG CH CY CZ DE DK EE ES FI FR GB GR
HU IE IT LI LU MC NL PL PT RO SE SI SK TR**

(30) Priority: **18.04.2003   JP 2003114580**

(43) Date of publication of application:
**18.01.2006   Bulletin 2006/03**

(73) Proprietor: **Bosch Corporation
Shibuya-ku
Tokyo 150-8360 (JP)**

(72) Inventors:
• **INOUE, Hidefumi
Higashimatsuyama-shi,
Saitama 355-0021 (JP)**

• **TAKASAKI, Yoshiyasu
Higashimatsuyama-shi,
Saitama 355-0021 (JP)**

(74) Representative: **Vossius & Partner
Siebertstraße 4
81675 München (DE)**

(56) References cited:
**EP-A2- 1 295 770        JP-A- 9 263 233
JP-A- 11 208 456        JP-A- 2003 112 617
JP-A- 2004 017 740        JP-U- 4 054 760**

## Description

Background ART

The present invention relates to a technical field of a negative pressure booster which is used in a brake booster or the like, and more particularly to a technical field of a negative pressure booster which can obtain, during an emergency operation such as during an emergency braking operation, an output larger than an output which is obtainable during a usual braking operation.

Conventionally, in a brake system of a vehicle such as an automobile, a negative pressure booster which makes use of negative pressure has been used in a brake booster. In such a conventional generally-used negative pressure booster, the interior of the negative pressure booster is partitioned into a constant pressure chamber into which negative pressure is introduced during the usual operation using a power piston and a variable pressure chamber in which the pressure varies. Further, during the usual braking operation with a usual step-in motion of a brake pedal, when an input shaft advances, a control valve is changed over and the atmosphere enters the variable pressure chamber. Then, the pressure difference arises between the variable pressure chamber and the constant pressure chamber and hence, the power piston is advanced. Accordingly, the negative pressure booster boosts an input of an input shaft attributed to a pedal step-in force at a given servo ratio and outputs the boosted force. Due to this output of the negative pressure booster, a master cylinder generates master cylinder pressure and a wheel cylinder is operated with the master cylinder pressure thus performing the usual braking operation.

Here, when it is necessary to perform braking in emergency, for example, there may be a case in which an unskilled driver such as a novice or the like cannot surely perform a brake pedal manipulation for emergency braking. Accordingly, a negative pressure booster having a so-called speed-detection-type mechanical brake assist (hereinafter also referred to as BA) which changes input-output characteristics in response to a step-in speed of a brake pedal which is mechanically detected has been proposed and has been put into practice. This negative pressure booster having the mechanical BA function generates, during an emergency braking operation in which the brake pedal is stepped in at a step-in speed larger than the step-in speed during the usual braking operation, generates an output larger than an output during the usual braking operation with a jumping quantity which is set larger than the jumping quantity during the usual braking operation.

However, in the case that the BA operation is performed only when the step-in speed of the brake pedal is larger than the step-in speed of the pedal during the usual braking operation, in spite of a state that the emergency braking operation is unnecessary, when a driver steps in the brake with a relatively small pedal step-in force at a pedal step-in speed faster than the pedal step-in speed during the usual braking operation as in the case of a "pat step operation" or the like, for example, there exists a possibility that the negative pressure booster performs an undesired BA operation. When the undesired BA operation is performed in this manner, the driver feels a discomfort in the brake pedal step-in manipulation thus giving rise to drawbacks that the pedal feeling becomes worsened and, at the same time, the number of generation of operation sounds at the time of starting the BA operation is increased.

Under such circumstances, there has been proposed a negative pressure booster having a mechanical BA function in which even when the brake pedal is stepped in faster than the step-in speed during the usual braking operation in cases other than the emergency case in which the BA operation is unnecessary, the undesired BA operation is not performed and the BA operation is surely performed only when the BA operation is necessary in emergency (see JP-A-2001-341632, for example).

In such a negative pressure booster, even in a state that a moving speed of an input rod based on the pedal step-in speed is larger than the moving speed of the input rod during the usual braking operation, when an input applied to the input rod is smaller than a given value, the BA operation is not performed, while only when the input applied to the input rod is larger than a given value, the BA operation is performed. Accordingly, an undesired BA operation can be prevented.

However, with respect to the negative pressure booster disclosed in the above-mentioned JP-A-2001-341632, only when the input applied to the input rod becomes larger than a given value, the BA operation is started. That is, the threshold value at which the BA operation is started is fixed irrespective of the input. Accordingly, it is impossible to adjust the threshold value and hence, it is difficult for such a negative pressure booster to assert that the pedal feeling during the emergency braking operation is always favorable.

Further, with respect to the negative pressure booster disclosed in the above-mentioned Japanese Laid-open Publication, to prevent the undesired BA operation and to perform the desired BA operation, a large number of minute parts such as a valve seat member 40, an auxiliary holding member 50, a holding member 52, an auxiliary input member 370 and the like are necessary (here, symbols being symbols which are used in the above-mentioned Japanese Laid-open Publication). Further, among these minute parts, it is necessary to connect some of these parts to each other with accuracy and hence, not only shapes of connecting portions of the respective parts and the connecting structure between pats are complicated but also it is necessary to control gaps at the connecting portions with high accuracy. Further, it is necessary to collectively arrange these parts in the inside of a narrow space in the vicinity of the place where an input member 37, a reaction member 54 and a contact member 70 which are provided to the conventional general negative pressure booster are arranged.

Accordingly, in the negative pressure booster disclosed in the above-mentioned JP-A-2001-314632 the structure of the mechanical BA is extremely cumbersome and, at the same time, there have been also drawbacks that the assembling thereof takes time and efforts and pushes up a cost.

EP-A2-1295770 discloses a brake booster according to the preamble of claim 1.

Disclosure of the Invention

The present invention has been made under such circumstances and it is an object of the present invention to provide a negative pressure booster having a mechanical assist function which can prevent an undesired assist operation and can surely perform a necessary assist operation, has the simpler structure, requires small time and efforts in assembling thereof, and can be manufactured at a low cost.

This object is achieved with the features of the claims.

According to the negative pressure booster of the present invention having such a constitution, by controlling the start of the operation of the rapid output increase means using the reaction member, when the output which is larger than the output during the usual operation is rapidly necessary in emergency, it is possible to surely perform the assist operation using the rapid output increase means. On the other hand, even when the input member is more rapidly operated than the usual operation in spite of the fact that the output larger than the output during the usual operation is not necessary rapidly, the undesired assist operation by the rapid output increase means can be prevented. Further, since it is possible to prevent the undesired assist operation, it is possible to reduce the number of occurrence of uncomfortable sounds during the assist operation and, at the same time, it is possible to reduce the number of operations of the rapid output increase means and hence, the durability of the rapid output increase means can be enhanced.

Further, since the start of the operation of the rapid output increase means is controlled using the reaction member, it is possible to adjust the threshold position at which the assist operation is started in response to the input.

Further, since the assist operation of the rapid output increase means is controlled using the reflection member, it is possible to use the reaction member and the input member which have been used in the general negative pressure booster conventionally as the rapid output increase means whereby the number of new parts used in the rapid output increase means can be reduced to few parts. Accordingly, it is possible to simplify the structure of the rapid output increase means and, at the same time, the rapid output increase means can be easily assembled and the manufacturing cost can be reduced.

Still further, according to the negative pressure booster of the present invention, by controlling the start of the operation of the rapid output increase means using the indentation quantity of the reaction disc which is generated by a pushing force from the valve plunger based on the input, when the output larger than the output during the usual operation is rapidly necessary in emergency and the like, it is possible to surely perform the assist operation using the rapid output increase means. On the other hand, even when the input member is rapidly operated than the usual operation in spite of the fact that the output larger than the output during the usual operation is not necessary rapidly, the undesired assist operation by the rapid output increase means can be prevented.

Further, since the position of the valve plunger which is the position at which the assist operation is started is controlled using the reaction disc, it is possible to adjust the threshold value based on the input. Accordingly, it is possible to obtain the favorable pedal feeling during the emergency operation.

Particularly, assuming that the negative pressure booster of the present invention is used as the brake booster, when the braking force larger than the braking force during the usual operation is rapidly necessary as in the case of the braking operation in emergency and the like, it is possible to surely perform the brake assist operation using the rapid output increase means. On the other hand, when the input shaft is more rapidly operated than the input shaft operated during the usual operation in spite of the fact that the braking force larger than the braking force during the usual operation is not necessary rapidly, it is possible to prevent the undesired brake assist operation by the rapid output increase means.

Further, during the assist operation, the operation adopts the two-stage input-output characteristics in which the input-output characteristics of the negative pressure booster make a servo ratio in a low input-output region and a servo ratio in a high input-output region different from each other. Accordingly, it is possible to apply an emergency braking corresponding to needs of a driver in a more reliable manner and hence, the driver can obtain the more favorable pedal feeling during the emergency braking.

Further, since the undesired assist operation can be prevented, it is possible to reduce the number of occurrence of uncomfortable sounds during the assist operation and, at the same time, it is possible to reduce the number of operations of the rapid output increase means and hence, the durability of the rapid output increase means can be enhanced.

Further, since the assist operation of the rapid output increase means is controlled based on the indentation quantity of the reaction disc, it is sufficient to add some constitutional parts such as a sleeve and the like to the reaction disc, the holder and the valve plunger which are provided to the general negative pressure booster conventionally. Accordingly, it is possible to simplify the structure of the rapid output increase means and, at the same time, the rapid output increase means can be easily assembled and the manufacturing cost can be reduced.

Brief Description of the Drawings

Fig. 1 is a cross-sectional view showing a first embodiment of a negative pressure booster according to the present invention in an inoperative state;
Fig. 2 is a partially enlarged cross-sectional view showing portions of a vacuum valve and an atmospheric valve of the first embodiment in an enlarged manner;
Fig. 3 is a view partially showing an operative state of a cylindrical member in the negative pressure booster of the first embodiment;
Fig. 4 shows a contact state between a reaction disc and a distance member in the negative pressure booster of the first embodiment, wherein (a) is a view showing the contact state during an inoperative state, (b) is a view showing the contact state during a usual braking operation, (c) is a view showing the contact state in a low input-output region during a BA operation, and (d) is a view showing the contact state in a high input-output region during the BA operation;
Fig. 5 explains the operation of a hook portions in the negative pressure booster of the first embodiment, wherein (a) is a view partially showing an inoperative state in which both hook portions are not engaged with each other, (b) is a view partially showing a midst part of an operation, and (c) is a view partially showing a state in which both hook portions are engaged with each other;
Fig. 6 is a view showing input-output characteristics of the negative pressure booster of the first embodiment having the jumping characteristics and explains threshold lines set to start the BA operation;
Fig. 7 shows a contact state between a reaction disc and a distance member in a negative pressure booster of a second embodiment of the present invention, wherein (a) is a view showing the contact state during an inoperative state, (b) is a view showing the contact state during a usual braking operation, (c) is a view showing the contact state in a low input-output region during a BA operation, and (d) is a view showing the contact state in a high input-output region during the BA operation;
Fig. 8 is a view showing input-output characteristics of the negative pressure booster of the second embodiment and a third embodiment having the jumping characteristics and explains threshold lines set to start the BA operation; and
Fig. 9 shows a contact state between a reaction disc and a distance member in the negative pressure booster of the third embodiment of the present invention, wherein (a) is a view showing the contact state during an inoperative state, (b) is a view showing the contact state during a usual braking operation, (c) is a view showing the contact state in a low input-output region during a BA operation, and (d) is a view showing the contact state in a high input-output region during the BA operation.

Best mode for carrying out the invention

Hereinafter, best modes for carrying out the present invention are explained.

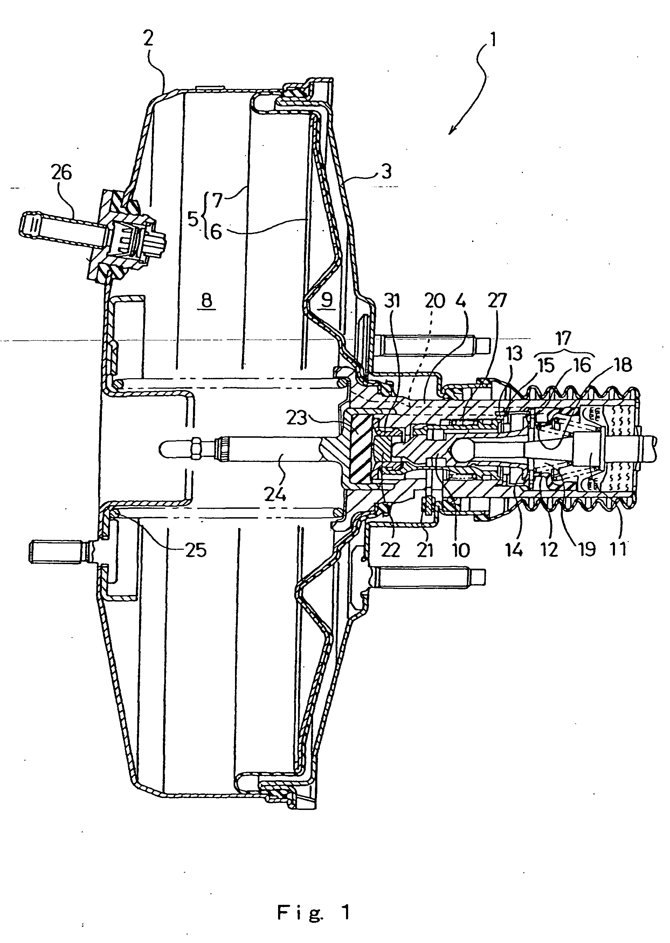

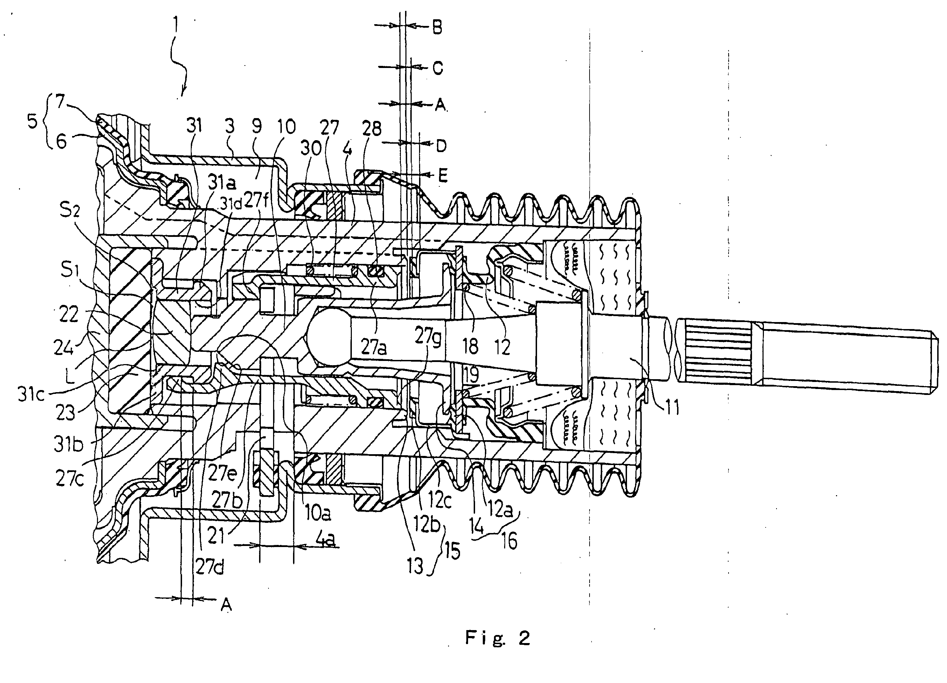

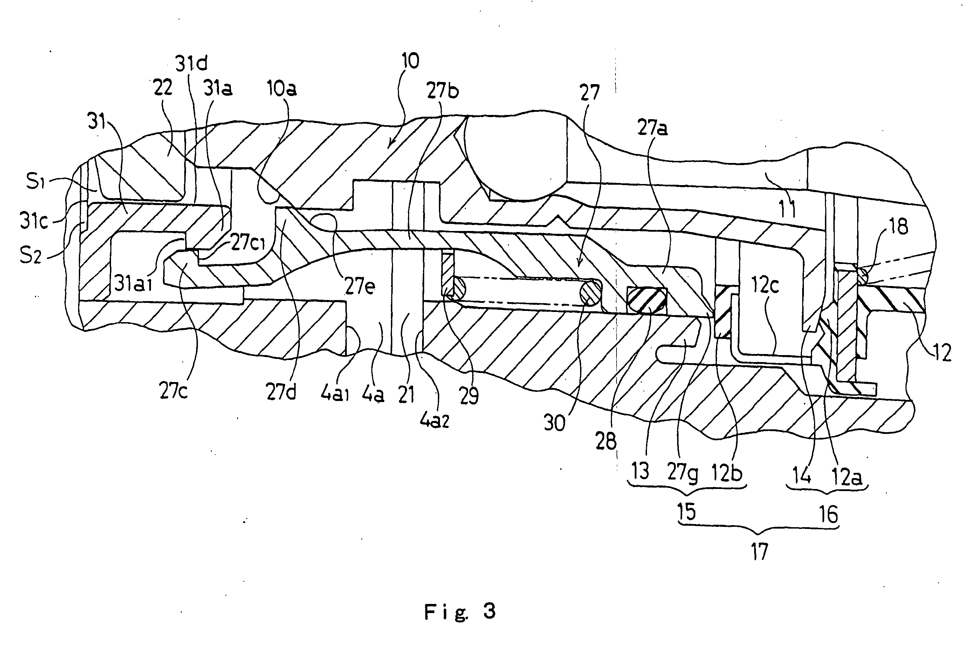

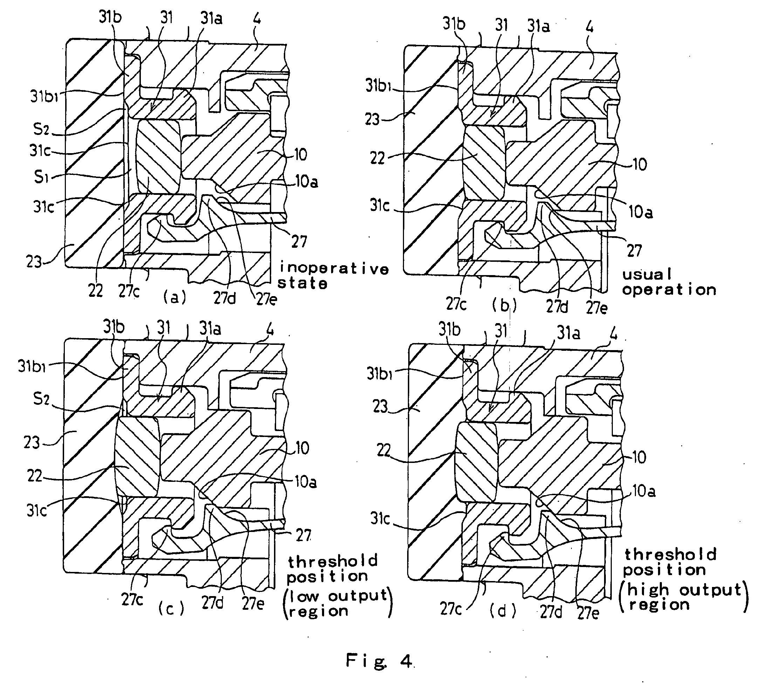

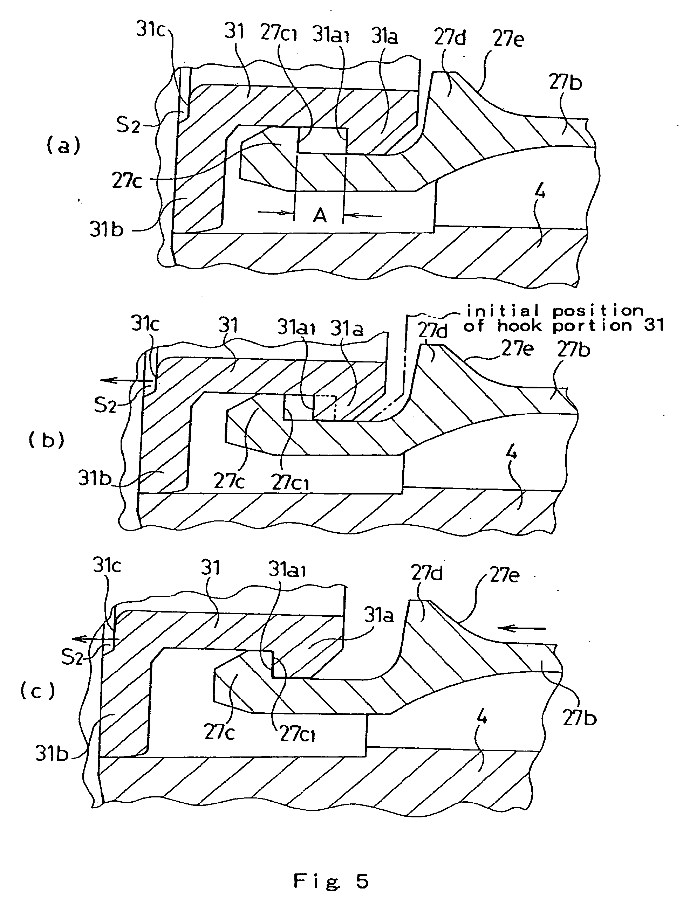

Fig. 1 is a cross-sectional view showing an example in an inoperative state in which an embodiment of a negative pressure booster according to the present invention is applied to a brake booster, Fig. 2 is a partially enlarged cross-sectional view showing portions of a vacuum valve and an atmospheric valve of the first embodiment in an enlarged manner, Fig. 3 is a view partially showing an operative state of a cylindrical member of the first embodiment, Fig. 4 shows a contact state between a reaction disc and a distance member of the first embodiment, wherein (a) is a view showing the contact state during an inoperative state, (b) is a view showing the contact state during a usual braking operation, (c) is a view showing the contact state in a low input-output region during a BA operation, and (d) is a view showing the contact state in a high input-output region during the BA operation, and Fig. 5 explains the operation of hook portions in the negative pressure booster shown in Fig. 1, wherein (a) is a view partially showing an inoperative state in which both hook portions are not engaged with each other, (b) is a view partially showing a midst part of an operation, and (c) is a view partially showing a state in which both hook portions are engaged with each other. Here, in the explanation made hereinafter, "front" and "rear" indicate "left" and "right" respectively in drawings.
First of all, in the negative pressure booster of this first embodiment, constitutional parts which are the same as the corresponding constitutional parts of a conventional general negative pressure booster are explained briefly only by reference to symbols. In Fig. 1 and Fig. 2, numeral 1 indicates the negative pressure booster, numeral 2 indicates a front shell, numeral 3 indicates a rear shell, numeral 4 indicates a valve body, numeral 4a indicates a key groove, numeral 5 indicates a power piston, numeral 6 indicates a power piston member, numeral 7 indicates a diaphragm, numeral 8 indicates a constant pressure chamber, numeral 9 indicates a variable pressure chamber, numeral 10 indicates a valve plunger which constitutes an input member of the present invention, numeral 11 indicates an input shaft which constitutes an input member of the present invention, numeral 12 indicates a valve element, numeral 13 indicates a vacuum valve seat, numeral 14 indicates an atmospheric valve seat, numeral 15 indicates a vacuum valve, numeral 16 indicates an atmospheric valve, numeral 17 indicates a control valve constituted of the vacuum valve 15 and the atmospheric valve 16, numeral 18 indicates a valve spring, numeral 19 indicates an atmosphere introducing passage, numeral 20 indicates a vacuum passage, numeral 21 indicates a key member, numeral 22 indicates a distance member, numeral 23 indicates a reaction disc, numeral 24 indicates an output shaft which constitutes an output member of the present invention, numeral 25 indicates a return spring, and numeral 26 indicates a negative pressure introducing passage.

Here, as shown in Fig. 3 and Fig. 4(a), between a front end surface of the distance member 22 and a rear end surface of the reaction disc 23 which faces the front end surface of the distance member 22, it is possible to form a space $S_1$ having a given gap L in the axial direction.

Next, the constitution of constitutional features of the negative pressure booster 1 of this first embodiment which differ from the conventional negative pressure booster is explained.

As shown in Fig. 2 and Fig. 3, in the negative pressure booster 1 of the first embodiment, the valve element 12 includes an atmospheric valve portion 12a which can be seated on the atmospheric valve seat 14 and a vacuum valve portion 12b which can be seated on the vacuum valve seat 13, wherein the atmospheric valve portion 12a and the vacuum valve portion 12b are connected with each other by a connecting element 12c and hence, integrally moved.

In an inner hole formed in the axial direction in the valve body 4, a cylindrical member 27 is hermetically and slidably fitted using a sealing member 28 such as an O-ring or the like. The cylindrical member 27 includes a cylindrical slide portion 27a and an engaging arm portion 27b which extends frontwardly from the cylindrical slide portion 27a in a bendable and resiliently deformable manner. The engaging arm portion 27b is formed in a cantilever shape using the cylindrical slide portion 27a as a proximal end, possesses the bending resiliency, and forms a hook portion 27c on a free end thereof. Further, on the engaging arm portion 27b disposed between the cylindrical slide portion 27a and the hook portion 27c, a projecting portion 27d which projects inwardly is formed and a rear surface of the projecting portion 27d forms a surface 27e to be pushed which is formed in a tapered face inclining rearwardly. Further, a stopper 27f which is capable of coming into contact with the key member 21 is formed on an inner peripheral side of the cylindrical member 27. Further, on a rear end of the cylindrical member 27, a vacuum valve seat 27g on which the vacuum valve portion 12b of the valve element 12 can be seated is formed. In the negative pressure booster 1 of the first embodiment, the vacuum valve seat 27g constitutes the vacuum valve 15 together with the above-mentioned vacuum valve seat 13 (hereinafter, in the explanation of the first embodiment, the vacuum valve seat 13 formed on the valve body 4 being referred to as a first vacuum valve seat 13 and the vacuum valve seat 27g formed on the cylindrical member 27 being referred to as a second vacuum valve seat 27g).

As shown in Fig. 3 in an enlarged manner, a spring 30 is disposed in a contracted manner between a retainer 29 formed in the valve body 4 and the cylindrical slide portion 27a of the cylindrical member 27, and the cylindrical member 27 is always biased rearwardly due to a spring force of the spring 30.

As shown in Fig. 2, to a front end portion of the valve body 4, a cylindrical holder 31 is integrally fixed together with the valve body 4, wherein the holder 31 is configured to slidably guide the distance member 22 and the hook portion 27c of the engaging arm portion 2 7b. As shown in Fig. 5(a) in an enlarged manner, a hook portion 31a is formed on an outer periphery of a rear end portion of the holder 31, and the hook portion 31a is in an axial direction engageable with the hook portion 27c on the engaging arm portion 27b side. Further, during the inoperative state of the negative pressure booster 1, as shown in Fig. 5(a), a distance between an engaging surface $31a_1$ of the hook portion 31a and the engaging surface $27c_1$ of the hook portion 27c is set to a distance A, wherein both hook portions 27c and 31a are set in a state that both hook portions 27c and 31a are not engaged with each other in the axial direction.

Further, on a front end portion of the holder 31, a flange 31b which comes into contact with the reaction disc 23 is formed, while on a contact surface $31b_1$ side of the flange 31b which comes into contact with the reaction disc 23, an annular recessed portion 31c which is concentric with the radial center of the holder 31 is formed. The annular recessed portion 31c is formed in a state that the recessed portion 31c is communicated with the a center hole 31d. Here, the recessed portion 31c is not always communicated with the center hole 31d and the recessed portion 31c may be arranged in a state that the recessed portion 31c is communicated neither with an inner periphery of the center hole 31d nor an outer periphery of the flange portion 31b. Further, the recessed portion 31c may be formed to be communicated with the outer periphery of the flange 31b. Still further, the annular recessed portion 31c may be continuously formed in the circumferential direction or may be also formed intermittently in the circumferential direction. With the provision of the recessed portion 31c, as shown in Fig. 4(a), during the inoperative state of the negative pressure booster 1, between the recessed portion 31c and a rear end surface of the reaction disc 23 which faces the recessed portion 31c, an annular space $S_2$ is formed.

As shown in Fig. 2, on the valve plunger 10, a pushing surface 10a having a frustoconical tapered surface inclining rearwardly toward an outer periphery is formed in a state that the pushing surface 10a faces the surface 27e to be pushed of the cylindrical member 27 in the axial direction. Then, when the valve plunger 10 moves frontwardly relative to the cylindrical member 27, the pushing surface 10a of the valve plunger 10 comes into contact with the surface 27e to be pushed of the cylindrical member 27 so as to push the surface 27e to be pushed.

Since the pushing surface 10a and the surface 27e to be pushed are formed in the tapered surface as described above, a wedge effect is generated when the pushing surface 10a pushes the surface 27e to be pushed. Due to such a wedge effect, as shown in Fig. 3, the engaging arm portion 27b is resiliently bent and deflected downwardly as shown in the drawing. Further, due to this deflection of the engaging arm portion 27b, the axial engagement between the hook portion 27c on the engaging arm portion side and the hook portion 31a on the holder side is released. When the axial engagement between both hook - portions 27c and 31a is released in this manner, due to a spring force of the spring 30, the cylindrical member 27 is moved rearwardly relative to the valve body 4 and hence, the second vacuum valve seat 27g comes into contact with the vacuum valve portion 12b of the valve element 12, and pushes up the vacuum valve portion 12b and the atmospheric valve portion 12a rearwardly.

Further, in a state that the distance A is set in the axial direction between both hook portions 27c and 31a, the second vacuum valve seat 27g of the cylindrical member 27 is set to be positioned in front of the first vacuum valve seat 13 by a given quantity B. Further, in the first embodiment, the given quantity B is set smaller than the above-mentioned given distance A (B<A) (to explain the present invention in comparison with the given quantity B, for facilitating the understanding, the distance A is also indicated at a portion of the vacuum valve 15 shown in Fig. 2). Further, in a state that the distance A between both hook portions 27c and 31a is eliminated and both hook portions 27c and 31a are axially engaged with each other, the relationship B<A is established and hence, as shown in Fig. 3, the second vacuum valve seat 27g of the cylindrical member 27 is configured to project rearwardly from the first vacuum valve seat 13 so as to push up both of the vacuum valve portion 12b and the atmospheric valve portion 12a rearwardly (here, Fig. 3 showing a state in which both hook portions 27c and 31a are disengaged from each other and the second vacuum valve seat 27g pushes both of the vacuum valve seat 12b and the atmospheric valve portion 12a).

In this manner, the state in which the engagement of both hook portions 27c and 31a is released and hence, the second vacuum valve seat 27g pushes up both of the vacuum valve portion 12b and the atmospheric valve portion 12a rearwardly forms the BA operative state. Accordingly, the position of the valve plunger 10 with respect to the cylindrical member 27 when the engagement of both hook portions 27c and 31a is disengagement forms a threshold position for starting the BA operation. The position of the valve plunger 10 with respect to the cylindrical member 27 at the time of starting the BA operation is controlled based on an indentation quantity of the reaction disc 23 which is generated by a pushing force which the valve plunger 10 pushes the reaction disc 23 by way of the distance member 22.

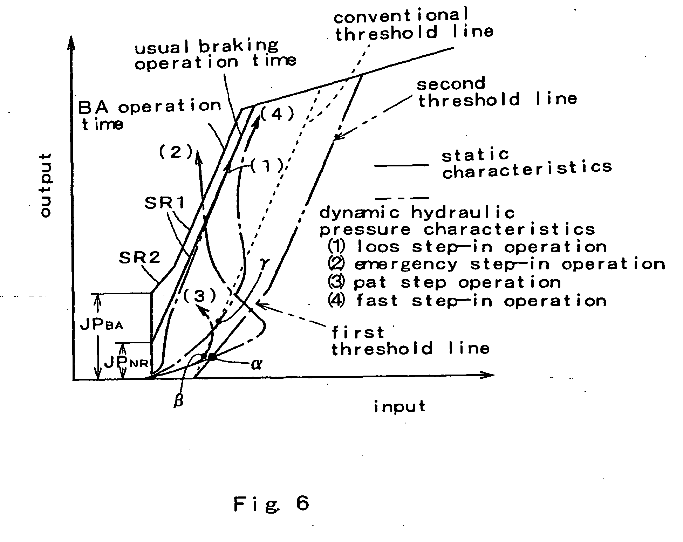

Further, in the first embodiment, the threshold value is set so that the threshold value is changed in response to the change of the input. As indicated by a chain double-dashed line in Fig. 6, the change of the threshold value with respect to the input is expressed by first and second threshold lines formed of two straight lines having the first predetermined inclination and the second predetermined inclination which differ from each other. That is, the first threshold line is set in the low input region and the inclination of the first threshold line is set to the servo ratio SR2 smaller than the servo ratio SR1 of the negative pressure booster 1 during the usual braking operation. The servo ratio SR2 is set to the same inclination as one of the servo ratios during the emergency braking operation. On the other hand, the second threshold line is set in the high input region and the inclination of the second threshold line is set to the same inclination as the servo ratio SR1 of the negative pressure booster 1 during the usual braking operation. That is, the threshold line in the first embodiment forms a polygonal line ranging from the low input region to the high input region and is positioned on the larger input side than the conventional threshold line where the inclination is fixed in the same manner as the servo ratio SR1 of the negative pressure booster 1 as indicated by a dotted line in Fig. 6.

Accordingly, during the emergency braking operation, since the brake pedal is stepped in at a step-in speed faster than a step-in speed during the usual braking operation and with a pedal step-in force larger than a pedal step-in force during the usual braking operation, as indicated by a chain line (2) in Fig. 6, a dynamic hydraulic pressure characteristic line with respect to the input intersects the threshold line at a point $\alpha$. Due to the intersection at the point $\alpha$, the engagement of both hook portions 27c and 31a is released and the BA operation is started.

Here, in the input-output characteristic diagram shown in Fig. 6, the threshold line of the first embodiment of the present invention is indicated by the chain double-dashed line and the conventional threshold line is indicated by a dotted line. However, it is needless to say that these threshold lines do not directly appear on the input-output characteristic diagram and constitute imaginary lines for facilitating the explanation.

Next, the manner of operation of the negative pressure booster 1 of the first embodiment is explained.

(Negative pressure booster during the inoperative state)

The negative pressure is always introduced into the constant pressure chamber 8 of the negative pressure booster 1 through the negative pressure introducing passage 25. Further, in the inoperative state of the negative pressure booster 1 shown in Fig. 1 and Fig. 2, the key member 21 is brought into contact with the rear shell 3 to assume a retraction limit. Accordingly, the valve body 4 and a valve plunger 6 assume the retraction limit due to the key member 21 and, further, the power piston 5, the input shaft 11 and the output shaft 24 also assume a retraction limit. In this inoperative state, the atmospheric valve portion 12a of the valve element 12 is seated on the atmospheric valve seat 14, while the vacuum valve portion 12b of the valve element 12 is separated from the first vacuum valve seat 13 and the second vacuum valve seat 27g. Accordingly, the variable pressure chamber 9 is interrupted from the atmosphere and is communicated with the constant pressure chamber 8 and hence, the negative pressure is introduced into the variable pressure chamber 9 whereby no substantial pressure difference is generated between the variable pressure chamber 9 and the constant pressure chamber 8.

Further, the stopper portion 27f of the cylindrical member 27 comes into contact with the key member 21 and hence, the rearward movement of the cylindrical member 27 is restricted whereby the initial position of the cylindrical member 27 with respect to the valve body 4 is defined. In this state, the axial distance A is set between both hook portions 27c and 31a and hence, both hook portions 27c and 31a are not engaged with each other and, at the same time, the second vacuum valve seat 27g is positioned in front of the first vacuum valve seat 13 by the given quantity B. Further, the pushing surface 10a of the valve plunger 10 is positioned behind the surface 27e to be pushed of the projecting portion 27d of the engaging arm portion 27b with a given distance and faces the surface 27e to be pushed in the axial direction.

(The negative pressure booster during usual braking operation)

When the brake pedal is stepped in at the step-in speed during the usual braking operation to perform the usual braking, the input shaft 11 advances and hence, the valve plunger 10 advances. Along with the advancing of the valve plunger 10, the vacuum valve portion 12b of the valve element 12 is seated on the first vacuum valve seat 13 and, at the same time, the atmospheric valve seat 14 is separated from the atmospheric valve portion 12a of the valve element 12 so as to close the vacuum valve 15 and to open the atmospheric valve 16. That is, the variable pressure chamber 9 is interrupted from the constant pressure chamber 8 and, at the same time, is communicated with the atmosphere. Accordingly, the atmosphere is introduced into the variable pressure chamber 9 through the atmosphere introducing passage 19 and the opened atmospheric valve 16. As a result, the pressure difference is generated between the variable pressure chamber 9 and the constant pressure chamber 8 and hence, the power piston 5 advances. Further, the output shaft 24 advances by way of the valve body 4 and hence, the piston of the master cylinder not shown in the drawing advances.

In the operation start initial stage of the negative pressure booster 1, both hook portions 27c and 31a are not engaged with each other in the axial direction and, at the same time, the cylindrical member 27 is held in the initial position due to the spring force of the spring 30 and the contacting of the stopper portion 27f with the key member 21 even when the valve body 4 advances and hence, only the valve body 4 and the output shaft 24 advance relative to the cylindrical member 27. Accordingly, as shown in Fig. 5(b), the hook portion 31a on the holder side approaches the hook portion 27c on the cylindrical member side and hence, the distance between both hook portions 27c and 31a which is set to the distance A initially is decreased. Accordingly, in the operation start initial state of the negative pressure booster 1, the stroke of the valve body 4 and the output shaft 24 becomes longer than the stroke of the input shaft 11. In other words, in the operation start initial state of the negative pressure booster 1, compared to the conventional negative pressure booster, the stroke of the input shaft 11 becomes shorter with respect to the same stroke of the output shaft 24 and, as a result, the pedal stroke can be shortened. Accordingly, the above-mentioned lost stroke in the brake system including the master cylinder and ensuing components can be effectively absorbed with the short stroke of the input shaft 11.

By allowing the valve body 4 to advance relative to the second vacuum valve seat 27g of the cylindrical member 27 by a given quantity, as shown in 5(c), the distance between both engaging surfaces $27c_1$ and $31a_1$ is eliminated and both hook portions 27c and 31a are engaged with each other and, thereafter, the cylindrical member 27 also advances integrally with the valve body 4. Accordingly, the operation to shorten the stroke of the input shaft 11 is finished. In this manner, the input stroke shortening means is constituted of both hook portions 27c and 31a.

Further, since the relationship B<A is established, in a state that both hook portions 27c and 31a are engaged with each other, as shown in Fig. 3, the second vacuum valve seat 27g projects rearwardly from the first vacuum valve seat 13 and hence, both of the vacuum valve portion 12b and the atmospheric valve portion 12a are pushed up rearwardly. This push-up quantity is given by a following formula.

$$C = A - B$$

In this case, as shown in Fig. 2, the distance A becomes a total stroke quantity of the cylindrical member 27 when the stroke is shortened.

On the other hand, since the atmospheric valve portion 12a is pushed up rearwardly, a gap is generated between the atmospheric valve portion 12a and the atmospheric valve seat 14 thus opening the atmospheric valve 16.

Further, although the distance member 22 also advances along with the advancing of the valve plunger 10, the distance member 22 is not yet brought into contact with the reaction disc 23. Accordingly, the reaction from the output shaft 24 is not transmitted to the distance member 22 from the reaction disc 23 and hence, the reaction is not also transmitted to the brake pedal by way of the valve plunger 10 and the input shaft 11. When the input shaft 11 further advances, the power piston 5 also further advances, and the piston of the master cylinder further advances by way of the valve body 4 and the output shaft 24.

When the above-mentioned lost stroke is eliminated, the negative pressure booster 1 substantially generates an output and hence, the master cylinder generates a master cylinder pressure (hydraulic pressure) due to such an output, and the wheel cylinder is operated with the master cylinder pressure and the braking force is generated.

Here, as shown in Fig. 4(b), due to the reaction applied to the output shaft 24 from the master cylinder, the reaction disc 23 largely expands rearwardly and hence, the reaction disc 23 is brought into contact with a surface of the recessed portion 31c in the valve body 4 which faces the reaction disc 23 and the distance member 22. Accordingly, the reaction is transmitted from the output shaft 24 to the distance member 22 through the reaction disc 23 and, further, the reaction is transmitted to the brake pedal by way of the valve plunger 10 and the input shaft 11. That is, the negative pressure booster 1 generates the output corresponding to the input thus exhibiting the jumping characteristics during the usual braking operation shown in Fig. 6.

In this case, when the valve body 4 advances relative to the valve plunger 10 and the distance member 22, a gap L between the reaction disc 23 and the distance member 22 is increased temporarily. However, since the space $S_2$ is ensured by the recessed portion 31c of the holder 31, as shown in Fig. 4(b), the reaction disc 23 easily and largely expands into the inside of the space $S_2$ and fills the insides of the spaces $S_1$, $S_2$ and hence, the opened gap L can be effectively absorbed whereby the recessed portion 31c in the valve body 4 is brought into contact with the surface, which faces the reaction disc 23, and the distance member 22.

Accordingly, the jumping characteristics of the negative pressure booster 1 of the first embodiment become substantially equal to the jumping characteristics of the conventional general negative pressure booster and hence, even when the stroke of the input shaft 11 is shortened, the large change of the jumping characteristics can be prevented whereby the driver can obtain the brake feeling substantially equal to the brake feeling of the conventional negative pressure booster.

During this usual braking operation, as shown in Fig. 4(b), there is no possibility that the pushing surface 10a comes into contact with the surface 27e to be pushed and there is also no possibility that the hook portion 27c is removed from the hook portion 31a.

When the output of the negative pressure booster 1 arrives at a given output which is obtained by boosting the input of the input shaft 11 generated by a pedal step-in force with the servo ratio SR1, as shown in Fig. 3, the atmospheric valve portion 12a is seated on the atmospheric valve seat 14 and hence, the atmospheric valve 16 is also closed thus establishing a balanced state of an intermediate load (in the vacuum valve 15, the vacuum valve portion 12b being already seated on the second vacuum valve seat 27g and closed). Here, the servo ratio SR1 is given by a following formula.

$$SR1 = (A1 + A2 + A3)/A3$$

Here, symbol A1 indicates a pressure receiving area of a front-end facing surface of the valve body 4 with which the reaction disc 23 comes into contact (a facing surface of the reaction disc 23), symbol A2 indicates a pressure receiving area of a front-end facing surface of the holder 31 (including a pressure receiving area of the recessed portion 31c) with which the reaction disc 23 comes into contact (a facing surface of the reaction disc 23), and symbol A3 indicates a pressure receiving area of a front end facing surface of the distance member 22 (a facing surface of the reaction disc 23). That is, (A1 + A2 + A3) is a transverse cross-sectional area of the reaction disc 23. Due to such setting of the servo ratio SR1, the wheel cylinder generates the relatively large braking force which is obtained by boosting the pedal step-in force and the usual braking is operated with such a braking force.

When the brake pedal is released to release the usual braking from a state in which both of the atmospheric valve 16 and the vacuum valve 15 of the negative pressure booster 1 shown in Fig. 3 are closed both of the input shaft 11 and the valve plunger 10 retract (move rearwardly). However, since air (atmosphere) is introduced into the variable pressure chamber 9, the valve body 4 and the cylindrical member 27 do not retract immediately. Accordingly, the atmospheric valve seat 14 of the valve plunger 10 pushes the atmospheric valve portion 12a of the valve element 12 rearwardly and hence, the vacuum valve portion 12b is separated from the second vacuum valve seat 27g so as to open the vacuum valve 15. Then, the variable pressure chamber 9 is communicated with the constant pressure chamber 8 by way of the opened vacuum valve 15 and the vacuum passage 20 and hence, air introduced into the variable pressure chamber 9 is discharged to a vacuum source by way of the opened vacuum valve 15, the vacuum passage 20, the constant pressure chamber 8 and the negative pressure introducing passage 26.

Accordingly, the pressure of the variable pressure chamber 9 is lowered and the pressure difference between the variable pressure chamber 9 and the constant pressure chamber 8 becomes smaller and hence, due to the spring force of the return spring 25, the power piston 5, the valve body 4 and the output shaft 24 retract.

Along with the retracting of the valve body 4, due to a spring force of a return spring of the piston of the master cylinder, the piston of the master cylinder and the output shaft 24 retract and hence, the release of the usual braking is started.

When the key member 21 is brought into contact with the rear shell 3 as shown in Fig. 2, the key member 21 is stopped and does not retract further. However, the valve body 4, the cylindrical member 27, the valve plunger 10 and the input shaft 11 retract further. First of all, the stopper portion 27f of the cylindrical member 27 comes into contact with the key member 21 shown in Fig. 2 and does not retract any more. However, the valve body 4, the valve plunger 10 and the input shaft 11 further retract and hence, the cylindrical member 27 moves frontwardly relative to the valve body 4. Accordingly, a second vacuum valve seat 17g is positioned in front of the first vacuum valve seat 13.

Then, the valve plunger 10 is brought into contact with the key member 21 as shown in Fig. 2 and does not retract further. Further, the front end $4a_1$ of the key groove 4a of the valve body 4 is brought into contact with the key member 21 as shown in Fig. 2 and the valve body 4 does not retract further. In this manner, the negative pressure booster 1 assumes the initial inoperative state shown in Fig. 1 and Fig. 2. Accordingly, the master cylinder assumes the inoperative state and hence, the master cylinder pressure is eliminated and, at the same time, the wheel cylinder becomes an inoperative state and the braking force is eliminated whereby the usual braking is released.

(During emergency braking operation)

When the brake pedal is rapidly stepped in at a step-in speed larger than a step in speed during the usual braking operation with a pedal step-in force larger than a pedal step-in force, the BA operation is performed. That is, with such a rapid step-in operation of the brake pedal, the input shaft 11 is moved at a moving speed equal to or more than a predetermined speed which is set larger than a moving speed during the usual braking operation and with the input equal to or more than the above-mentioned predetermined value. Along with this movement of the input shaft 11, the valve plunger 10 advances relative to the valve body 4, the cylindrical member 27 and the holder 31 by a distance larger than a distance during the usual braking. Then, first of all, in the same manner as the above-mentioned usual braking operation, the vacuum valve portion 12b is seated on the first vacuum valve seat 13 so as to close the vacuum valve 15 and, at the same time, the atmospheric valve seat 14 is separated from the atmospheric valve portion 12a to open the atmospheric valve 16. Accordingly, in the same manner as the usual braking operation, the valve body 4 and the output shaft 24 advance and hence, the above-mentioned lost stroke is eliminated whereby the master cylinder generates the master cylinder pressure. Here, since the cylindrical member 27 does not advance, the valve body 4 advances relative to the cylindrical member 27 and the hook portion 31a on the holder side is axially engaged with the hook portion 27c on the engaging arm portion side. Thereafter, the cylindrical member 27 advances integrally with the valve body 4.

Further, before the hook portion 31a and the hook portion 27c are engaged with each other, the distance member 22 comes into contact with the reaction disc 23 (the gap L between the distance member 22 and the reaction disc 23 is eliminated) and the distance member 22 pushes the reaction disc 23. Here, since the input is equal to or more than the predetermined input value, the distance member 22 largely cuts into the reaction disc 23 whereby a contact portion of the reaction disc 23 with the distance member 22 is elastically deformed and is largely indented.

Further, since the distance member 22 largely cuts into the reaction disc 23, the valve plunger 10 largely advances and hence, the pushing surface 10a comes into contact with the surface 27e to be pushed of the engaging arm portion 27b and pushes the surface 27e to be pushed frontwardly. Further, since the pushing surface 10a and the surface 27e to be pushed are formed into a tapered surface, as described above, due to the wedge effect generated between the pushing surface 10a and the surface 27e to be pushed, the engaging arm portion 27b is deflected outwardly as shown in Fig. 3. When the valve plunger 10 advances further, as shown in Figs. 4 (c) and (d), the valve plunger 10 assumes a position where the engagement between the hook portion 27c and the hook portion 31a is released with respect to the cylindrical member 27, that is, the threshold position where the BA operation is started. That is, as shown in Fig. 6, the dynamic master cylinder pressure (hydraulic pressure) characteristics with respect to the input of the negative pressure booster 1 in the emergency step-in operation assumes the α position which intersects the threshold line.

Next, when the valve plunger 10 further advances and the engagement of the hook portion 27c and the hook portion 31a is released, due to the spring force of the spring 30, the cylindrical member 27 largely moves rearwardly relative to the valve body 4. Here, the key member 21 brings a rear end surface thereof into contact with a rear end $4a_2$ of the key groove 4a of the valve body 4 and hence, the rearward movement of the key member 21 relative to the valve body 4 is prevented. However, when the stopper portion 27f of the cylindrical member 27 comes into contact with the key member 21, the cylindrical member 27 is stopped relative to the valve body 4 and hence, the further relative rearward movement is prevented. In such a state, the projecting portion 27d of the engaging arm portion 27b is brought into contact with the pushing surface 10a of the valve plunger 10 or an outer peripheral surface of the valve plunger 10 which is contiguously formed with the pushing surface 10a and hence, the hook portion 27c is held at a position where the hook portion 27c is not engaged with the hook portion 31a.

Further, due to such rearward movement of the cylindrical member 27, the second vacuum valve seat 27g comes into contact with the vacuum valve portion 12b of the valve element 12 and pushes up the vacuum valve portion 12b and the atmospheric valve portion 12a rearwardly. Assuming a pushing amount in such an operation as D, a total stroke quantity E of the cylindrical member 27 with respect to the valve body 4 is obtained by a following formula.

$$E=A+D.$$

Due to the rearward pushing-up of the vacuum valve portion 12b, the vacuum valve portion 12b is separated from the first vacuum valve seat 13. However, since the second vacuum valve seat 27g is brought into contact with the vacuum valve portion 12b, the vacuum valve 15 is held in a closed state. Further, due to the rearward pushing-up of the atmospheric valve portion 12a, the atmospheric valve portion 12a is rapidly separated from the atmospheric valve seat 14 compared to the usual braking operation and hence, the atmospheric valve 16 is opened and the atmosphere is introduced into the variable pressure chamber. Further, the valve body 4 advances due to such operations and hence, the atmospheric valve portion 12a is again seated on the atmospheric valve seat 14 so as to close the atmospheric valve 16. Accordingly, the control valve 17 assumes a balanced state in which both of the vacuum valve 15 and the atmospheric valve 16 are closed and hence, the negative pressure booster 1 assumes an intermediate load state.

Here, although the input applied to the input shaft 11 is equal to or above the predetermined value, in a relatively small low input-output region, as shown in Fig. 4(c), the reaction disc 23 does not bulge into the inside of the annular space $S_2$ formed of the recessed portion 31c and a recess of the reaction disc 23 and hence, a state in which the space $S_2$ is formed is held.

Accordingly, a servo ratio SR2 in the low input-output region during the emergency braking operation is given by a following formula.

$$SR2=(A1+A2+A3-A4)/A3$$

Here, symbol A4 indicates a pressure receiving area of the recessed portion 31c. Accordingly, the servo ratio SR2 is smaller than the above-mentioned serve ratio SR1 during the usual braking operation.

Further, in the high input-output region where the input applied to the input shaft 11 is relatively high, as shown in Fig. 4(d), the reaction disc 23 is elastically deformed and expands thus eliminating the recess and, at the same time, the reaction disc 23 expands into the inside of the annular recessed portion 31c and is filled in the annular space $S_2$ whereby the reaction disc 23 is also brought into contact with a bottom portion of the annular recessed portion 31c which constitutes a pressure receiving surface. That is, a state which is equal to the above-mentioned usual braking operation time shown in Fig. 4(b) is established. Accordingly, the servo ratio in the high input-output region during the emergency step-in operation becomes SR1.

In this manner, according to the negative pressure booster 1 of the first embodiment, during the emergency braking operation, when the input of the negative pressure booster 1, that is, the step-in force of the brake pedal is relatively small, the BA operation is performed with the small servo ratio SR2, while when the input of the negative pressure booster 1, that is, the step-in force of the brake pedal is relatively large, the BA operation is performed with the large servo ratio SR1 in the same manner as the usual braking operation time.

During the BA operation, the balance position of the vacuum valve 15 and the atmospheric valve 16 retracts from the balance position during the usual operation and hence, the gap L which is larger than the gap during the usual operation is generated between the distance member 22 and the reaction disc 23. This gap L constitutes a gap for increasing a jumping quantity (JP quantity) of the negative pressure booster 1.

Accordingly, as shown in Fig. 6, the jumping quantity ($JP_{BA}$) of the negative pressure booster 1 during the BA operation is increased than the jumping quantity ($JP_{NR}$) during the usual operation and hence, the negative pressure booster 1 rapidly generates the output larger than the output during the usual braking operation whereby the emergency brake is rapidly and effectively operated. The static input-output characteristics during the emergency braking operation of the negative pressure booster 1 in the first embodiment are constituted of 2-stage characteristics constituted of two different servo ratios SR1, SR2.

In this manner, the rapid output increase means of the negative pressure booster 1 of the first embodiment is constituted of the slide portion 27a, the engaging arm portion 27b, both hook portions 27c and 31a, the surface 27e to be pushed of the projecting portion 27d, the pushing surface 10a of the valve plunger 10, the spring 30, and the holder 31 having the recessed portion 31c.

When the brake pedal is released to release the emergency braking, in the same manner as the above-mentioned usual breaking, both of the input shaft 11 and the valve plunger 10 retract. However, since air (atmosphere) is introduced into the variable pressure chamber 9, the valve body 4 and the cylindrical member 27 do not retract immediately. Accordingly, the atmospheric valve seat 14 of the valve plunger 10 pushes the atmospheric valve portion 12a of the valve element 12 rearwardly and hence, the vacuum valve portion 12b is separated from the second vacuum valve seat 27g so as to open the vacuum valve 15. Then, the variable pressure chamber 9 is communicated with the constant pressure chamber 8 by way of the opened vacuum valve 15 and the vacuum passage 20 and hence, air introduced into the variable pressure chamber 9 is discharged to a vacuum source by way of the opened vacuum valve 15, the vacuum passage 20, the constant pressure chamber 8 and the negative pressure introducing passage 26.

Further, the force that the pushing surface 10a of the valve plunger 10 pushes the surface 27e to be pushed of the engaging arm portion 27b becomes small and the deflection of the engaging arm portion 27b becomes small due to the resiliency thereof.

On the other hand, the pressure of the variable pressure chamber 9 is lowered and the pressure difference between the variable pressure chamber 9 and the constant pressure chamber 8 becomes small and hence, due to the spring force of the return spring 25, the power piston 5, the valve body 4 and the output shaft 24 retract. Along with the retracting of the valve body 4, due to a spring force of a return spring of the piston of the master cylinder, the piston of the master cylinder and the output shaft 24 retract and hence, the release of the emergency braking is started.

When the key member 21 is brought into contact with the rear shell 3 as shown in Fig. 2, the key member 21 is stopped and does not retract further. Further, since the stopper portion 27f is brought into contact with the key member 21, the cylindrical member 27 is also stopped and does not retract further. However, the valve body 4, the valve plunger 10 and the input shaft 11 retract further and hence, the cylindrical member 27 moves frontwardly relative to the valve body 4. Accordingly, the second vacuum valve seat 17g is positioned in front of the first vacuum valve seat 13. Further, the pushing surface 10a is separated from the surface 27e to be pushed and no more pushes the surface 27e to be pushed and, at the same time, the hook portion 31a is rearwardly moved relative to the hook portion 27c in the axial direction so as to eliminate the overlapping of the hook portion 31a and the hook portion 27c in the radial direction whereby the engaging arm portion 27 restores the initial state due to the resiliency thereof.

Then, the valve plunger 10 is brought into contact with the key member 21 as shown in Fig. 2 and does not retract further. Further, the front end $4a_1$ of the key groove 4a of the valve body 4 is brought into contact with the key member 21 as shown in Fig. 2 and the valve body 4 does not retract further. In this manner, the negative pressure booster 1 assumes the initial inoperative state shown in Fig. 1 and Fig. 2. Accordingly, the master cylinder assumes the inoperative state and hence, the master cylinder pressure is eliminated and, at the same time, the wheel cylinder becomes an inoperative state and the braking force is eliminated whereby the emergency braking is released.

(During pedal step-in operation at a faster pedal step-in speed and with a smaller pedal step-in force than the usual braking operation)

As a step-in operation of the brake pedal, there has been known a pedal step-in operation referred to as pat step operation. This pat step operation is an operation to step in the brake pedal at a pedal step-in speed faster than a pedal step-in speed during the usual braking operation with a relatively small pedal step-in force.

When the driver performs this pat step operation, the brake pedal is stepped in at the step-in speed larger than the usual speed and hence, the input shaft 11 is moved at a speed equal to or more than the predetermined speed. However, the pedal step-in force is small and hence, the input applied to the input shaft 11 is smaller than the predetermined input value during the emergency braking operation. Accordingly, the distance member 22 advances and comes into contact with the reaction disc 23 and cuts into the reaction disc 23 and hence, the reaction disc 23 is elastically deformed and indented. However, since the input is smaller than the predetermined input value in this case, an indentation quantity of the reaction disc 23 which is a cut-into quantity of the distance member 22 into the reaction disc 23 is small. Accordingly, the valve plunger 10 does not reach the position where the engagement between the hook portion 27c and the hook portion 31a is released with respect to the cylindrical member 27, that is, the threshold position at which the BA operation is stared. That is, as indicated by a chain line (3) in Fig. 6, the dynamic hydraulic pressure characteristic line with respect to the input does not intersect the threshold line of the first embodiment which is positioned on the side with the larger input than the conventional threshold line. Accordingly, the valve plunger 10 does not advance until the engagement of both hook portions 27c and 31a is released and hence, the BA operation is not performed. With respect to the conventional threshold line, there exists a possibility that during the pat step operation, the dynamic hydraulic pressure characteristic line intersects the conventional threshold line at a point β and the BA operation is started. However, in this first embodiment, the undesired BA operation during the pat step operation can be prevented.

(During the fast step-in operation)

Even when the driver performs the fast step-in operation for a longer time than the pat step operation with respect to the brake pedal in a state that the emergency braking is not necessary, the brake pedal is stepped in at a step-in speed larger than the usual speed and the input shaft 11 is moved at a speed equal to or more than the predetermined speed. However, the pedal step-in force is small and hence, the input applied to the input shaft 11 is smaller than the predetermined input value during the emergency braking operation. Accordingly, the distance member 22 advances, comes into contact with the reaction disc 23 and cuts into the reaction disc 23 and hence, the reaction disc 23 is elastically deformed and indented. However, since the input is smaller than the predetermined input value in this case, an indentation quantity of the reaction disc 23 is small. The indentation quantity of the reaction disc 23 is a cut-into quantity of the distance member 22 into the reaction disc 23.

Accordingly, the valve plunger 10 does not reach the position where the engagement between the hook portion 27c and the hook portion 31a is released with respect to the cylindrical member 27, that is, the threshold position at which the BA operation is stared. That is, as indicated by a chain line (4) in Fig. 6, the dynamic hydraulic characteristic line with respect to the input does not intersect the threshold line of the first embodiment which is positioned on the side with the larger input than the conventional threshold line. Accordingly, the valve plunger 10 does not advance until the engagement of both hook portions 27c and 31a is released and hence, the BA operation is not performed. With respect to the conventional threshold line, there exists a possibility that during the fast step-in operation, the dynamic hydraulic characteristic line intersects the conventional threshold line at a point γ and the BA operation is started. However, in this first embodiment, the undesired BA operation during the fast step-in operation can be prevented.

In this manner, according to the negative pressure booster 1 of this first embodiment which is applied to the brake system, it is possible to obtain the large stroke of the output shaft 24 while shortening the stroke of the input shaft 11. Accordingly, with the small pedal stroke during the initial stage for starting the braking operation, it is possible to effectively eliminate the lost stroke of the brake system in the master cylinder and succeeding elements.

Further, during the emergency braking operation, the atmospheric valve 16 is rapidly opened so as to increase the jumping quantity than the jumping quantity during the usual operation and hence, it is possible to rapidly increase the output of the negative pressure booster. Accordingly, it is possible to perform the BA control so as to rapidly and effectively operate the emergency brake.

In this manner, it is possible to perform the BA control while shortening the stroke of the input shaft 11 and hence, it is possible to perform the favorable brake control.

Further, since the control to shorten the stroke of the input shaft 11 and the BA control use the common cylindrical member 27, even when both of these controls are performed, it is possible to reduce the number of parts and, at the same time, the cost can be reduced. Further, this embodiment adopts the mechanical structure using the cylindrical member 27 and hence, it is possible to perform these controls in a more reliable manner with the simple structure whereby it is possible to provide the highly reliable and, at the same time, compact constitution.

Further, the threshold position at which the BA operation is started, that is, the position of the valve plunger 10 with respect to the cylindrical member 27 at which the engagement of both hooks 27c and 31a is released is controlled based on the indentation quantity of the reaction disc 23. Accordingly, when the pedal step-in speed is relatively large and the pedal step-in force is relatively small as in the case of the pat step operation, for example, even when the pedal step-in speed is larger than the pedal step-in speed during the usual braking operation, the BA operation is not performed and hence, the undesired BA operation can be prevented. Further, since the undesired BA operation can be prevented, the number of generation of uncomfortable sounds during the BA operation such as sounds generated when the engagement of both hooks 27c and 31a is released can be reduced and, at the same time, the number of the disengagement of both hooks 27c and 31a can be reduced thus enhancing the durability of both hooks 27c and 31a.

Further, the position of the valve plunger 10 with respect to the cylindrical member 27 which is the threshold position at which the BA operation is started is controlled using the reaction disc 23 and hence, the threshold value can be adjusted in response to the input. Accordingly, it is possible to obtain the favorable pedal feeling during the emergency braking operation.

Further, during the BA operation, the servo ratio is set to the small servo ratio SR2 in the low input-output region and is set to the large servo ratio SR1 in the high input-output region thus providing the two-stage input-output characteristics to the negative pressure booster 1. Accordingly, it is possible to perform the emergency braking corresponding to the needs of the driver in a more reliable manner and hence, it is possible to obtain the more favorable pedal feeling during the emergency braking operation.

Further, in this first embodiment, the mechanical constitution which can perform the necessary BA operation in a reliable manner and prevents the undesired BA operation merely uses parts such as the reaction disc 23, the cylindrical member 27, the spring 30 and the holder 31 which have relatively simple shapes and are small in number compared to the conventional constitution and hence, the structure can be simplified, the assembling can be facilitated and the costs can be reduced.

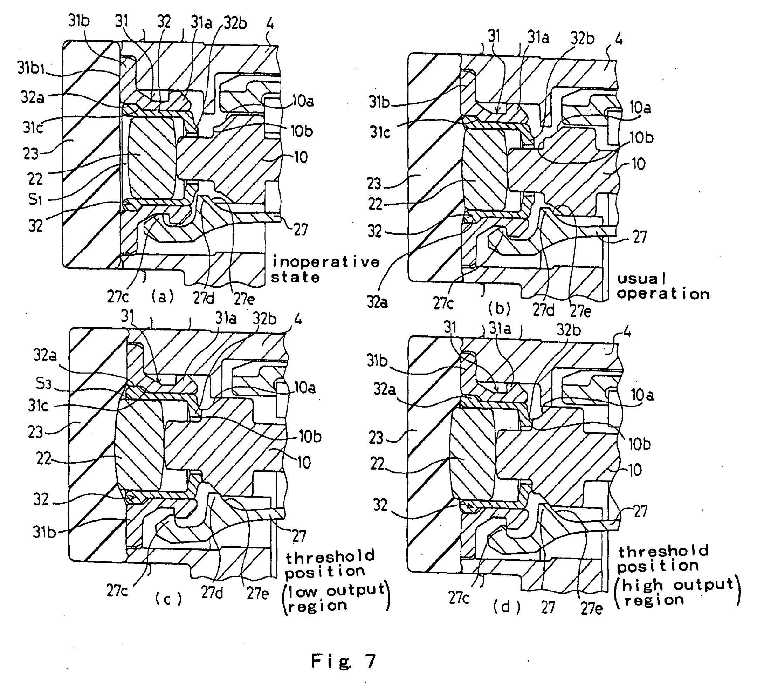

Fig. 7 is a view similar to Fig. 4 and shows a second embodiment of the present invention, wherein (a) is a view showing a contact state during inoperative state, (b) is a view showing the contact state during the usual braking operation, (c) is a view showing the contact state in a low input-output region during a BA operation, and (d) is a view showing the contact state in a high input-output region during the BA operation. Here, constitutional elements identical with the constitutional elements in the above-mentioned first embodiment are given same symbols and the detailed explanation thereof is omitted.

In the above-mentioned first embodiment, the distance member 22 is directly and slidably fitted in the inside of the holder 31. In the negative pressure booster 1 of the second embodiment, however, as shown in Figs. 7(a) to (d), a sleeve 32 is slidably disposed in the inside of the holder 31 and, at the same time, the distance member 22 is slidably mounted in the inside of the sleeve 32. On the outer periphery of the front end portion of the sleeve 32, an annular outer flange 32a is formed, while the outer flange 32a is slidably fitted in the inside of the recessed portion 31c of the holder 31. Further, on the inner periphery of the rear end portion of the sleeve 32, an annular inner flange 32b is formed, while the valve plunger 10 penetrates the inner flange 32b with a gap.

As shown in Fig. 7(a), the outer flange 32a of the sleeve 32 brings a rear end thereof into contact with a bottom portion of the recessed portion 31c of the holder 31 in an axial direction and hence, the retraction limit of the sleeve 32 with respect to the holder 31 which is fixed to the valve body 4 is restricted. Further, as shown in Figs. 7(c) and (d), during the BA operation, the inner flange 32b of the sleeve 32 brings a rear end thereof into contact with a stepped portion 10b of the valve plunger 10 and the bottom portion of the recessed portion 31c of the holder 31 in the axial direction. In this case, the rear end of the sleeve 32 comes into contact with the stepped portion 10b of the valve plunger 10 and, thereafter, further, the sleeve 32 is pushed forward by the valve plunger 10 and hence, the rear end of the outer flange 32a is spaced apart from the bottom portion of the recessed portion 31c in the axial direction.

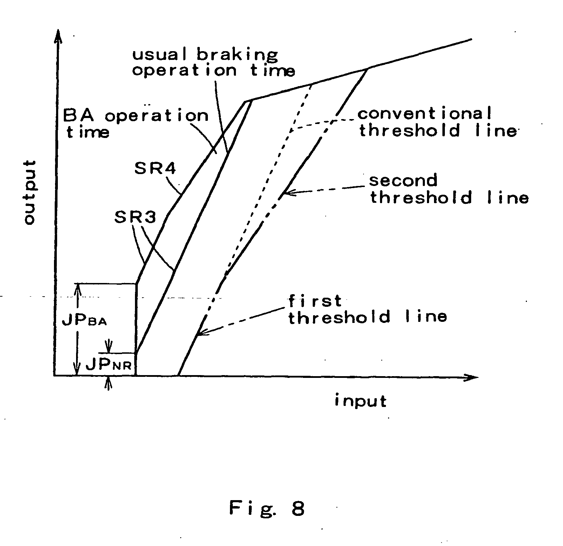

By forming the sleeve 32 in this manner, as indicated by a chain double-dashed line in Fig. 8, with respect to inclinations of the threshold lines of the second embodiment, the first threshold line in the low input-output region is set to a value equal to the servo ratio SR3 during the usual braking operation, while a second threshold line in the high input-output region is set to a value equal to the servo ratio SR4 which is smaller than the servo ratio SR3.

Other constitution of the negative pressure booster 1 of the second embodiment is substantially as same as the constitution of the above-mentioned first embodiment.

Next, the manner of operation of the negative pressure booster 1 of the second embodiment is explained.

(The negative pressure booster during the inoperative state)

As shown in Fig. 7(a), during the inoperative state of the negative pressure booster, the rear end of the outer flange 32a of the sleeve 32 comes into contact with the bottom portion of the recessed portion 31c of the holder 31 in an axial direction and hence, the retraction limit of the sleeve 32 is restricted with respect to the holder 31. Further, the rear end of the inner flange 32b of the sleeve 32 is spaced apart from the stepped portion 10b of the valve plunger 10.

The other state of the negative pressure booster 1 of the second embodiment during the inoperative state is same as the state of the negative pressure booster 1 of the first embodiment.

(During the usual braking operation)

As shown in Fig. 7(b), during the usual braking operation of the negative pressure booster 1, in a state that the rear end of the outer flange 32a comes into contact with the bottom portion of the recessed portion 31c whereby the retraction limit of the sleeve 32 is restricted with respect to the holder 31 and the rear end of the inner flange 32b is spaced apart from the stepped portion 10b of the valve plunger 10, the rear end surface of the reaction disc 23 comes into contact with all of a front end surface of the valve body 4 which faces the reaction disc 23, a front end surface of the holder 31 which faces the reaction disc 23, a front end surface of the sleeve 32 which faces the reaction disc 23 and a front end surface of the distance member 22 which faces the reaction disc 23. However, since the rear end of the sleeve 32 does not come into contact with the stepped portion 10b of the valve plunger 10, the reaction from the reaction disc 23 is transmitted to the valve plunger 10 by way of only the distance member 22. Accordingly, the servo ratio SR3 during the usual braking operation can be given by a following formula.

$$SR3=(A1+A2+A3+A5)/A3.$$

Here, symbol A5 indicates a pressure receiving area of the front end surface of the sleeve 32 which faces the reaction disc 23.

The other state of the negative pressure booster 1 of the second embodiment during the usual braking operation is as same as the corresponding state of the first embodiment.

(During the emergency braking operation)

As shown in Figs. 7(c) and (d), during the emergency braking operation when the input shaft 11 moves at a moving speed equal to or faster than the predetermined speed which is larger than the moving speed and with an input equal to or larger than the predetermined value during the usual braking operation, the stepped portion 10b of the valve plunger 10 comes into contact with the rear end of the inner flange 32b of the sleeve 32 and the valve plunger 10 pushes the sleeve 32 forwardly. Accordingly, the sleeve 32 moves forwardly by a given quantity toward the holder 31 and the rear end of the outer flange 32a is spaced apart from the bottom portion of the recessed portion 31c in an axial direction. On the other hand, based on the large input, the valve plunger 10 pushes the reaction disc 23 by way of the distance member 22 and largely cuts into the reaction disc 23 and hence, the contact portion with the distance member 22 of the reaction disc 23 is largely indented.

In the same manner as the first embodiment, in the low input-output region, as shown in Fig. 7(c), since the reaction disc 23 hardly expands due to the elastic deformation, a space S3 is formed between the front end surface of the sleeve 32 and the reaction disc 23. That is, the reaction disc 23 does not come into contact with the front end surface of the sleeve 32. Accordingly, even when the rear end of the sleeve 32 comes into contact with the stepped portion 10b of the valve plunger 10, the reaction from the reaction disc 23 is transmitted to the valve plunger 10 by way of only the distance member 22. Accordingly, the servo ratio in the low input-output region during the emergency braking operation becomes SR3 which is equal to the servo ratio in the low input-output region during the usual braking operation.

Further, in the high input-output region, as shown in Fig. 7(d), the reaction disc 23 largely expands in the direction and fills the space S3 and hence, the reaction disc 23 also comes into contact with the front end surface of the sleeve 32. Accordingly, the rear end of the sleeve 32 comes into contact with the stepped portion 10b of the valve plunger 10 and the rear end of the sleeve 32 is spaced apart from the bottom portion of the recessed portion 31c and hence, the sleeve 32 is movable in the backward direction with respect to the holder 31 whereby the reaction from the reaction disc 23 is transmitted to the valve plunger 10 also by way of the sleeve 32 in addition to by way of the distance member 22. Accordingly, the servo ratio in the high input-output region during the emergency braking operation becomes SR4 which is smaller than the servo ratio SR3. Accordingly, the static input-output characteristics during the emergency braking operation of the negative pressure booster 1 of the second embodiment become two-stage input-output characteristics formed of a polygonal line opposite to the polygonal line in the first embodiment.

Other states of the negative pressure booster 1 in the second embodiment during the emergency braking operation is as same as the state of the negative pressure booster 1 of the first embodiment.

In the negative booster device 1 according to the second embodiment 1, with the use of the threshold line set in the second embodiment which meets needs of a user, it is possible to obtain the brake feeling which meets the needs of the user.

Other manners of operation and advantageous effects of the negative pressure booster 1 of the second embodiment are equal to those of the first embodiment.

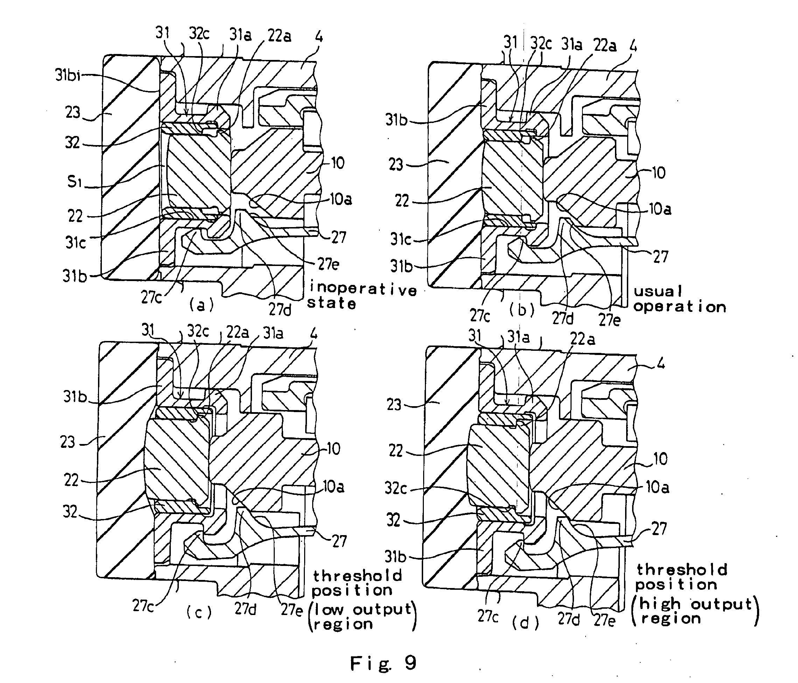

Fig. 9 is a view similar to Fig. 7 and shows a third embodiment of the present invention, wherein (a) is a view showing a contact state during an inoperative state, (b) is a view showing the contact state during the usual braking operation, (c) is a view showing the contact state in a low input-output region during a BA operation, and (d) is a view showing the contact state in a high input-output region during the BA operation. Here, constitutional elements identical with the constitutional elements in the above-mentioned second embodiment are given same symbols and the detailed explanation thereof is omitted.

In the above-mentioned second embodiment, the rear end of the outer flange 32a which is formed on the outer periphery of the front end portion of the sleeve 32 is allowed to come into contact with the bottom portion of the recessed portion 31c of the holder 31 and, at the same time, the rear end of the inner flange 32b which is formed on the inner periphery of the rear end portion of the sleeve 32 is allowed to come into contact with the stepped portion 10b of the valve plunger 10. As shown in Figs. 9(a) to (d), however, in the negative pressure booster 1 of the third embodiment, the outer flange 32a and the inner flange 32b are not formed on the sleeve 32. In the third embodiment, the rear end of the sleeve 32 is allowed to come into contact with the bottom portion of the recessed portion 31c of the holder 31 in the axial direction and, at the same time, a stepped portion 32c is formed on the inner periphery surface of the sleeve 32. Further, on the distance member 22, a stepped portion 22a which is engageable with the stepped portion 32c of the sleeve 32 is formed.

Then, the rear end of the sleeve 32 of the third embodiment corresponds to the rear end of the outer flange 32a of the second embodiment and performs the equal manner of operation as the rear end of the outer flange 32a. Further, the stepped portion 32c of the sleeve 32 of the third embodiment corresponds to the rear end of the inner flange 32b of the second embodiment and performs the substantially equal manner of operation as the rear end of the inner flange 32b. Further, the stepped portion 22a of the distance member 22 of the third embodiment corresponds to the stepped portion 10b of the valve plunger 10 of the second embodiment and performs the substantially equal manner of operation as the stepped portion 10b.

Accordingly, while the reaction in the high input-output region during the emergency braking operation is respectively transmitted to the valve plunger 10 by way of the distance member 22 and the sleeve 32 in the second embodiment, the third embodiment differs from the second embodiment in that the reaction transmitted by way of the sleeve 32 is transmitted to the distance member 22 and the reaction is transmitted to the valve plunger 10 only from the distance member 22.

Other manners of operation and advantageous effects of the negative pressure booster 1 of the third embodiment are equal to the manner of operation and the advantageous effects of the negative pressure booster 1 of the second embodiment.

Here, in the above-mentioned respective embodiments, by various changing a size and a shape of the recessed portion 31c of the holder 31, a size and a shape of the sleeve 32 or the like, it is possible to change the inclinations of the threshold lines. Further, in the above-mentioned respective embodiments, although a portion of the inclination of the threshold line is set to a value equal to the servo ratio during the usual braking operation, it is not always limited to such a value and, irrespective of the servo ratio during the usual braking operation, the inclination of the threshold line can be arbitrarily set.

Further, it is not always necessary to provide the holder 31 and the distance member 22 which are used in the above mentioned respective embodiments. In this case, it is suitable that the recessed portion 31c and the sleeve 32 are directly provided to the valve body and the front end of the valve plunger 10 may be arranged to directly face the reaction disc 23.

Further, although the present invention is applied to a single-type negative pressure booster having one power piston 5 in the above mentioned embodiments, the present invention is applicable to a tandem-type negative pressure booster having a plurality of power pistons 5.

Further, although the negative pressure booster of the present invention is applied to the braking system in the above-mentioned embodiments, the present invention is applicable to another system or device using a negative pressure booster.

Industrial Applicability

The negative pressure booster according to the present invention is suitably applicable to a booster in a boosting system such as a braking booster in a braking boosting system of an automobile or the like.

**Claims**

1. A negative pressure booster which is operated in response to the introduction of atmosphere during an operation of an input member (11) and generates an output from an output member (24), and transmits a reaction corresponding to the output from the output member (24) to the input member (11) by means of a reaction member, wherein
the negative pressure booster includes rapid output increase means which is operated when the input member is moved at a speed equal to or more than a predetermined speed set larger than a moving speed and with an input equal to or more than a predetermined value in a usual operation, and increases the output faster than the usual operation time, and
a start of the operation of the rapid output increase means is controlled using the reaction member, **characterized in that** the predetermined value is constituted of a first threshold line which is set corresponding to the input when the input falls within a low input region and is changed linearly with a first predetermined inclination with respect to a change of the input and a second threshold line which is set corresponding to the input when the input falls within a high input region and is changed linearly with a second predetermined inclination different from the first predetermined inclination with respect to the change of the input.

2. A negative pressure booster according to claim 1, comprising:

a valve body (4) which is reciprocally arranged in the inside of a space formed by a shell, and hermetically and slidably penetrates the shell;
a power piston (5) which is connected with the valve body (4) and partitions the inside of the space into a constant pressure chamber (8) into which a negative pressure is introduced and a variable pressure chamber (9) into which atmosphere is introduced during an operation;
a valve plunger (10) which is movably arranged on the valve body (4);
an input shaft (11) which is connected with the valve plunger (10) and is slidably arranged in the inside of the valve body;
an output shaft (24) which is moved together with the valve body (4) and generates an output due to an operation of the power piston (5);
a vacuum valve (15) which is arranged in the inside of the valve body (4) and is controlled by the advancing or the retracting of the valve plunger (10) so as to establish the interruption or the communication between the constant pressure chamber (8) and the variable pressure chamber (9);
an atmospheric valve (16) which is arranged in the inside of the valve body (4) and is controlled by the advancing or the retracting of the valve plunger (10) so as to establish the communication or the interruption between the variable pressure chamber (9) and the atmosphere; and
a reaction disc (23) which transmits a reaction from the output shaft (24) to the valve plunger (10), wherein
the rapid output increase means is operated when the input shaft (11) is moved at a speed equal to or more than a predetermined speed set larger than a moving speed in a usual operation and with an input equal to or more than a predetermined value, and increases the output rapidly as compared with the usual operation time, and
a start of the operation of the rapid output increase means is controlled using a recess of the reaction disc (23) which is formed by a pushing force from the valve plunger (10).

**3.** A negative pressure booster according to claim 1 or 2, wherein a cylindrical holder (31) is formed on the valve body (4) in a state that the cylindrical holder (31) brings at least a portion of a face thereof which faces the reaction disc (23) into contact with the reaction disc (23),

the holder (31) slidably holds a facing end portion of the valve plunger which faces the reaction disc and is capable of coming into contact with the reaction disc (23) or a distance member (22) which faces the reaction disc (23), is arranged to be capable of coming into contact with the reaction disc (23) and adjusts a distance between the valve plunger (10) and the reaction disc (23),

a recessed portion (31c) is formed in the facing face of the holder with the reaction disc (23), and

when the input shaft (11) is moved at a speed equal to or more than a predetermined speed set larger than a moving speed during the usual operation and the input is equal to or more than a value on the first threshold line and falls within the low input region, the reaction disc (23) does not come into contact with the recessed portion (31c), while when the input shaft (11) is moved at a speed equal to or more than a predetermined speed set larger than a moving speed during the usual operation and the input falls within the high input region, the reaction disc (23) comes into contact with the recessed portion (31c).

**4.** A negative pressure booster according to claim 1 or 2, wherein a cylindrical holder (31) is formed on the valve body (4) in a state that the cylindrical holder (31) brings at least a portion of a face thereof which faces the reaction disc into contact with the reaction disc (23), and a sleeve is slidably mounted in the inside of the cylindrical holder (31),

the sleeve slidably holds a facing end portion of the valve plunger (10) which faces the reaction disc (23) and is capable of coming into contact with the reaction disc (23) or a distance member (22) which faces the reaction disc, is arranged to be capable of coming into contact with the reaction disc (23) and adjusts a distance between the valve plunger (10) and the reaction disc (23),

one end of the sleeve is capable of coming into contact with the reaction disc and, at the same time, another end of the sleeve is capable of coming into contact with the valve plunger or the distance member, and

when the input shaft (11) is moved at a speed equal to or more than a predetermined speed set larger than a moving speed during the usual operation and the input is equal to or more than a value on the first threshold line and falls within the low input region, the reaction disc (23) does not come into contact with one end of the sleeve, while when the input shaft (11) is moved at a speed equal to or more than a predetermined speed set larger than a moving speed during the usual operation and the input falls within the high input region, the reaction disc (23) comes into contact with one end of the sleeve and another end of the sleeve comes into contact with the valve plunger (10) or the distance member.

**Patentansprüche**

**1.** Unterdruckverstärker, der in Antwort auf die Zufuhr von Atmosphärendruck während einer Aktivierung eines Eingangselements (11) aktiviert wird und eine Ausgangskraft von einem Ausgangselement (24) erzeugt und über ein Reaktionselement eine der Ausgangskraft entsprechende Reaktionskraft vom Ausgangselement (24) zum Eingangselement (11) überträgt, wobei

der Unterdruckverstärker zum schnellen Erhöhen der Ausgangskraft eine Einrichtung aufweist, die aktiviert wird, wenn das Eingangselement mit einer Geschwindigkeit, die größer oder gleich einer vorgegebenen Geschwindigkeit ist, die auf einen Wert gesetzt ist, der größer ist als eine Bewegungsgeschwindigkeit bei einem Normalbetrieb, und mit einer Eingangskraft bewegt wird, die größer oder gleich einem vorgegebenen Wert für einen Normalbetrieb ist, und die Ausgangskraft schneller erhöht als während des Normalbetriebs; und

ein Start des Betriebs der Einrichtung zum schnellen Erhöhen der Ausgangskraft unter Verwendung des Reaktionselements gesteuert wird,

**dadurch gekennzeichnet, dass**

der vorgegebene Wert aus einer ersten Schwellenlinie, die gemäß der Eingangskraft gesetzt ist, wenn die Eingangskraft innerhalb eines niedrigen Eingangskraftbereichs liegt und sich mit einer ersten vorgegebenen Steigung bezüglich einer Änderung der Eingangskraft linear ändert, und einer zweiten Schwellenlinie gebildet wird, die gemäß der Eingangskraft gesetzt ist, wenn die Eingangskraft innerhalb eines hohen Eingangskraftbereichs liegt und sich mit einer von der ersten vorgegebenen Steigung verschiedenen zweiten vorgegebenen Steigung bezüglich der Änderung der Eingangskraft ändert.

**2.** Unterdruckverstärker nach Anspruch 1, mit:

einem Ventilkörper (4), der im Inneren eines durch ein Gehäuse gebildeten Raums hin- und hergehend beweglich ist und das Gehäuse hermetisch dicht und gleitend durchdringt;

einem Arbeitskolben (5), der mit dem Ventilkörper (4) verbunden ist und das Innere des Raums in eine Kammer (8) mit konstantem Druck, der ein Unterdruck zugeführt wird, und eine Kammer (9) mit variablem Druck teilt, der während eines Betriebs- oder Betätigungszustands Atmosphärendruck zugeführt wird;

einem auf dem Ventilkörper (4) beweglich angeordneten Ventilkolben (10);

einer Eingangswelle (11), die mit dem Ventilkolben (10) verbunden ist und im Inneren des Ventilkörpers gleitend angeordnet ist;

einer Ausgangswelle (24), die sich zusammen mit dem Ventilkörper (4) bewegt und durch eine Betätigung des Arbeitskolbens (5) eine Ausgangskraft erzeugt;

einem Unterdruckventil (15), das im Inneren des Ventilkörpers (4) angeordnet ist und durch eine Vorschub- oder Rückzugbewegung des Ventilkolbens (10) gesteuert wird, um eine Trennung oder eine Verbindung zwischen der Kammer (8) mit konstantem Druck und der Kammer (9) mit variablem Druck herzustellen;

einem Atmosphärenventil (16), das im Inneren des Ventilkörpers (4) angeordnet ist und durch eine Vorschub- oder Rückzugbewegung des Ventilkolbens (10) gesteuert wird, um die Verbindung oder die Trennung zwischen der Kammer (9) mit variablem Druck und der Atmosphäre herzustellen; und

einer Reaktionsscheibe (23) zum Übertragen einer Reaktionskraft von der Ausgangswelle (24) zum Ventilkolben (10), wobei

die Einrichtung zum schnellen Erhöhen der Ausgangskraft aktiviert wird, wenn die Eingangswelle (11) mit einer Geschwindigkeit, die größer oder gleich einer vorgegebenen Geschwindigkeit ist, die auf einen Wert gesetzt ist, der größer ist als eine Bewegungsgeschwindigkeit während eines Normalbetriebs, und mit einer Eingangskraft bewegt wird, die größer oder gleich einem vorgegebenen Wert ist, und die Ausgangskraft im Vergleich zum Normalbetrieb schnell erhöht; und

ein Start des Betriebs der Einrichtung zum schnellen Erhöhen der Ausgangskraft unter Verwendung einer Einsenkung der Reaktionsscheibe (23) gesteuert wird, die durch eine durch den Ventilkolben (10) ausgeübte Druckkraft erzeugt wird.

3.   Unterdruckverstärker nach Anspruch 1 oder 2, wobei

ein zylindrischer Halter (31) auf den Ventilkörper (4) derart ausgebildet ist, dass mindestens ein Teil einer Fläche des zylindrischen Halters (31), die der Reaktionsscheibe (23) zugewandt ist, mit der Reaktionsscheibe (23) in Kontakt kommt,

der Halter (31) einen der Reaktionsscheibe zugewandten Endabschnitt des Ventilkolbens gleitend hält und dazu geeignet ist, mit der Reaktionsscheibe (23) oder einem Abstandselement (22) in Kontakt zu kommen, das der Reaktionsscheibe (23) zugewandt ist, und ferner dazu geeignet ist, mit der Reaktionsscheibe (23) in Kontakt zu kommen, und einen Abstand zwischen dem Ventilkolben (10) und der Reaktionsscheibe (23) einstellt,

ein Vertiefungsabschnitt (31c) in der der Reaktionsscheibe (23) zugewandten Fläche des Halters ausgebildet ist, und

wenn die Eingangswelle (11) mit einer Geschwindigkeit bewegt wird, die größer oder gleich einer vorgegebenen Geschwindigkeit ist, die auf einen Wert gesetzt ist, der größer ist als eine Bewegungsgeschwindigkeit während des Normalbetriebs, und die Eingangskraft größer oder gleich einem Wert auf der ersten Schwellenlinie ist und in den niedrigen Eingangskraftbereich fällt, die Reaktionsscheibe (23) nicht mit dem Vertiefungsabschnitt (31c) in Kontakt kommt, während die Reaktionsscheibe (23) mit dem Vertiefungsabschnitt (31c) in Kontakt kommt, wenn die Eingangswelle (11) mit einer Geschwindigkeit bewegt wird, die größer oder gleich einer vorgegebenen Geschwindigkeit ist, die auf einen Wert gesetzt ist, der größer ist als eine Bewegungsgeschwindigkeit während des Normalbetriebs, und die Eingangskraft in den hohen Eingangskraftbereich fällt.

4.   Unterdruckverstärker nach Anspruch 1 oder 2, wobei

ein zylindrischer Halter (31) auf dem Ventilkörper (4) derart ausgebildet ist, dass mindestens ein Teil einer Fläche des zylindrischen Halters (31), die der Reaktionsscheibe (23) zugewandt ist, mit der Reaktionsscheibe (23) in Kontakt kommt, und eine Buchse im Inneren des zylindrischen Halters (31) gleitend montiert ist,

die Buchse einen der Reaktionsscheibe (23) zugewandten Endabschnitt des Ventilkolbens (10) gleitend hält und dazu geeignet ist, mit der Reaktionsscheibe (23) oder einem Abstandselement (22) in Kontakt zu kommen, das der Reaktionsscheibe zugewandt ist, und ferner dazu geeignet ist, mit der Reaktionsscheibe (23) in Kontakt zu kommen, und einen Abstand zwischen dem Ventilkolben (10) und der Reaktionsscheibe (23) einstellt,

ein Ende der Buchse dazu geeignet ist, mit der Reaktionsscheibe in Kontakt zu kommen und gleichzeitig ein anderes Ende der Buchse dazu geeignet ist, mit dem Ventilkolben oder dem Abstandselement in Kontakt zu kommen, und

wenn die Eingangswelle (11) mit einer Geschwindigkeit bewegt wird, die größer oder gleich einer vorgegebenen Geschwindigkeit ist, die auf einen Wert gesetzt ist, der größer ist als eine Bewegungsgeschwindigkeit während des Normalbetriebs, und die Eingangskraft größer oder gleich einem Wert auf der ersten Schwellenlinie ist und in den niedrigen Eingangskraftbereich fällt, die Reaktionsscheibe (23) nicht mit einem Ende der Buchse in Kontakt kommt, während die Reaktionsscheibe (23) mit einem Ende der Buchse in Kontakt kommt und das andere Ende der Buchse mit dem Ventilkolben (10) oder dem Abstandselement in Kontakt kommt, wenn die Eingangswelle (11) mit einer Geschwindigkeit bewegt wird, die größer oder gleich einer vorgegebenen Geschwindigkeit ist, die auf einen Wert gesetzt ist, der größer ist als eine Bewegungsgeschwindigkeit während des Normalbetriebs, und die Eingangskraft in einen hohen Eingangskraftbereich fällt.

## Revendications

1. Amplificateur de pression négative mis en marche en réponse à l'introduction d'atmosphère pendant le fonctionnement d'un élément d'entrée (11) et qui génère une sortie provenant d'un élément de sortie (24) et transmet une réaction correspondant à la sortie venant de l'élément de sortie (24), à l'élément d'entrée (11) au moyen d'un élément de réaction, dans lequel

   l'amplificateur de pression négative comprend un moyen d'augmentation rapide de la sortie qui est mis en marche quand l'élément d'entrée se déplace à une vitesse égale ou supérieure à une vitesse prédéterminée réglée plus grande qu'une vitesse de déplacement et avec une entrée égale ou supérieure à une valeur prédéterminée en marche ordinaire et augmente la sortie plus rapidement que la durée de marche ordinaire, et
   un démarrage du fonctionnement du moyen d'augmentation de la sortie rapide est contrôlé en utilisant un élément de réaction,

   **caractérisé en ce que** la valeur prédéterminée est constituée d'une première ligne de seuil réglée de manière à correspondre avec l'entrée quand l'entrée tombe dans une zone de faible entrée et change linéairement avec une première inclinaison prédéterminée par rapport à un changement de l'entrée et une deuxième ligne de seuil réglée de manière à correspondre à l'entrée quand l'entrée tombe dans une zone d'entrée élevée et change linéairement avec une deuxième inclinaison prédéterminée qui est différente de la première inclinaison prédéterminée par rapport au changement de l'entrée.

2. Amplificateur de pression negative selon la revendication 1 comprenant:

   un corps de soupape (4) agencé réciproquement au sein d'un espace formé d'une coque et pénètre la coque hermétiquement et par coulissement;
   un piston de puissance (5) raccordé au corps de soupape (4) et divise l'intérieur de l'espace en une chambre à pression constante (8), dans laquelle une pression négative est introduite, et une chambre à pression variable (9), dans laquelle de l'atmosphère est introduit pendant un fonctionnement;
   un piston de soupape (10) agencé mobile sur le corps de soupape (4);
   un arbre d'entrée (11) raccordé au piston de soupape (10) et qui est agencé coulissant à l'intérieur du corps de soupape;
   un arbre de sortie (24) déplacé avec le corps de soupape (4) et génère une sortie due à un fonctionnement du piston de puissance (5);
   une soupape de dépression (15) agencée à l'intérieur du corps de soupape (4) et qui est commandée par l'avance ou le retrait du piston de soupape (10) de manière à établir l'interruption ou la communication entre la chambre à pression constante (8) et la chambre à pression variable (9);
   une soupape atmosphérique (16) agencée à l'intérieur du corps de soupape (4) et qui est commandée par l'avance ou le retrait du piston de soupape (10) de manière à établir la communication ou l'interruption entre la chambre à pression variable (9) et l'atmosphère, et
   un disque de réaction (23) qui transmet une réaction de l'arbre de sortie (24) au piston de soupape (10),

   dans lequel
   le moyen pour augmenter rapidement la sortie est mis en marche quand l'arbre d'entrée (11) est mis en mouvement à une vitesse égale ou supérieure à plus qu'une vitesse prédéterminée réglée plus grande qu'une vitesse de mouvement en marche ordinaire et avec une entrée égale ou supérieure à une valeur prédéterminée, et augmente rapidement la sortie comparé à la durée ordinaire de fonctionnement, et
   un démarrage de la marche du moyen pour augmenter rapidement la sortie est commandé en utilisant un creux du disque de réaction (23) formé par une force de pression venant du piston de soupape (10).

3. Amplificateur de pression négative selon la revendication 1 ou 2, dans lequel un support cylindrique (31) est formé sur le corps de soupape (4) dans un état où le support cylindrique (31) met au moins une partie d'une face de celui-ci qui fait face au disque de réaction (23) en contact avec le disque de réaction (23),

le support (31) tient de manière coulissante la face d'une partie terminale du piston de soupape qui fait face au disque de réaction et qui est apte à entrer en contact avec le disque de réaction (23) ou un élément de distance (22) qui fait face au disque de réaction (23), est agencé pour pouvoir entrer en contact avec le disque de réaction (23) et règle la distance entre le piston de soupape (10) et le disque de réaction (23),

une partie creuse (31c) est formée dans la face de face du support avec le disque de réaction (23), et quand l'arbre d'entrée (11) se déplace à une vitesse égale ou supérieure à une vitesse prédéterminée réglée plus grande qu'une vitesse de mouvement pendant la marche ordinaire et l'entrée est égale ou supérieure à une valeur sur la première ligne de seuil et tombe dans la zone de faible entrée, le disque de réaction (23) n'entre pas en contact avec la partie creuse (31c), tandis que quand l'arbre d'entrée (11) se déplace à une vitesse égale ou supérieure à une vitesse prédéterminée réglée plus grande qu'une vitesse de mouvement pendant la marche ordinaire et l'entrée tombe dans la zone d'entrée élevée, le disque de réaction (23) entre en contact avec la partie creuse (31c).

4. Amplificateur de pression négative selon la revendication 1 ou 2, dans lequel un support cylindrique (31) est formé sur le corps de soupape (4) dans un état où le support cylindrique (31) met au moins une partie d'une face de celui-ci, qui fait face au disque de réaction, en contact avec le disque de réaction (23), et un manchon est monté coulissant à l'intérieur du support cylindrique (31),

le manchon tient coulissant une face de la partie terminale du piston de soupape (10) qui fait face au disque de réaction (23) et qui est capable d'entrer en contact avec le disque de réaction (23) ou un élément de distance (22) qui fait face au disque de réaction, est agencé pour pouvoir entrer en contact avec le disque de réaction (23) et règle une distance entre le piston de soupape (10) et le disque de réaction (23),

une extrémité du manchon est capable d'entrer en contact avec le disque de réaction et, en même temps, une autre extrémité du manchon est capable d'entrer en contact avec le piston de soupape ou l'élément de distance, et

quand l'arbre d'entrée (11) se met en mouvement à une vitesse égale ou supérieure à une vitesse prédéterminée réglée plus grande qu'une vitesse de mouvement pendant la marche ordinaire et que l'entrée est égale ou supérieure à une valeur sur la première ligne de seuil et tombe dans la zone de faible entrée, le disque de réaction (23) n'entre pas en contact avec une extrémité du manchon, tandis que quand l'arbre d'entrée (11) se met en mouvement à une vitesse égale ou supérieure à une vitesse prédéterminée réglée plus grande qu'une vitesse de mouvement pendant la marche ordinaire et l'entrée tombe dans la zone d'entrée élevée, le disque de réaction (23) entre en contact avec une extrémité du manchon et une autre extrémité du manchon entre en contact avec le piston de soupape (10) ou l'élément de distance.

Fig. 1

Fig. 2

Fig. 3

EP 1 616 769 B1

(a) inoperative state

(b) usual operation

(c) threshold position (low output) region

(d) threshold position (high output) region

Fig. 4.

EP 1 616 769 B1

EP 1 616 769 B1

(a)

(b)

(c)

Fig. 5

**Fig. 6**

(a) inoperative state

(b) usual operation

(c) threshold position (low output) region

(d) threshold position (high output) region

Fig. 7

EP 1 616 769 B1

Fig. 8

Fig. 9

(a) inoperative state

(b) usual operation

(c) threshold position (low output) region

(d) threshold position (high output) region

EP 1 616 769 B1

**EP 1 616 769 B1**

**Patent documents cited in the description**

- JP 2001341632 A
- JP 2001314632 A
- EP 1295770 A2